# FASCICULE DE BREVET EUROPEEN

(11) **EP 1 295 459 B1**
(45) Date de publication et mention de la délivrance du brevet: **19.10.2005**
(21) Numéro de dépôt: 01949526.6
(22) Date de dépôt: 26.06.2001
(51) Int. Cl.: H04M 11/06, H04N 7/173

(54) **BOITIER DE RECEPTION DE DONNEES NUMERIQUES A DEUX INTERFACES DE TYPE MODEM**
GEHÄUSE MIT 2 MODEMSCHNITTSTELLEN ZUM EMPFANG VON DIGITALEN DATEN
DIGITAL DATA RECEPTION BOX WITH TWO MODEM-TYPE INTERFACES

(30) Priorité: 26.06.2000 FR 0008139
(43) Date de publication de la demande: 26.03.2003
(73) Titulaire: AT-SKY (S.A.S), 13600 La Ciotat (FR)
(72) Inventeur: CHATAIGNIER, Arnaud, 13400 Aubagne (FR)
(74) Mandataire: Roman, Michel
(86) Numéro de dépôt international: PCT/FR2001/002014
(87) Numéro de publication internationale: WO 2002/001845

(56) Documents cités:
- EP-A- 0 929 043
- US-A- 5 929 850

## Description

La présente invention a pour objet un boîtier de réception de données numériques à deux interfaces de type modem.

Il a en particulier pour objet de permettre aux utilisateurs de recevoir des données numériques provenant d'une source d'émission (satellite par exemple), Les données peuvent être par exemple des sites Web aspirés depuis Internet et mis en forme, les sites sélectionnés étant préalablement "aspirés" sur le réseau Internet et mis en forme pour une transmission par satellite avant d'être transmis aux destinataires.

Les mots "interface de type modem" seront utilisés dans ce brevet comme référence à une interface utilisant une ligne téléphonique pour transmettre des données.

Les satellites géostationnaires sont capables de transmettre de nombreux programmes faciles à capter grâce à une petite antenne indiviquelle parabolique. Cette antenne est braquée définitivement en direction du satellite choisi, dont la position dans l'espace, par rapport à la Terre, est immuable. Cette simplicité de réception d'un vaste ensemble de programmes ralentit actuellement de façon significative le développement des réseaux câblés.

De plus, la transmission numérique par satellite permet d'envoyer vers des terminaux (téléviseurs ou ordinateurs) des données informatiques à grande vitesse.

Des rapprochements sont actuellement en cours notamment entre les acteurs commerciaux du réseau Internet et les opérateurs de télévision. L'écran de télévision pourrait constituer un terminal pour Internet et celui du micro-ordinateur permettrait de recevoir les chaînes de télévision, en attendant une intégration complète des réseaux et la réception sur des écrans uniques. Dans cette perspective, les possibilités de connexion par satellite sur le réseau Internet sont appelées à se développer de façon importante.

Sur les sites de réception, les récepteurs peuvent trouver dans les flux émis par satellite un ou plusieurs "bouquets de données", desquels les données doivent être filtrées et extraites pour être présentées à l'utilisateur sur écran de télévision ou moniteur d'ordinateur.

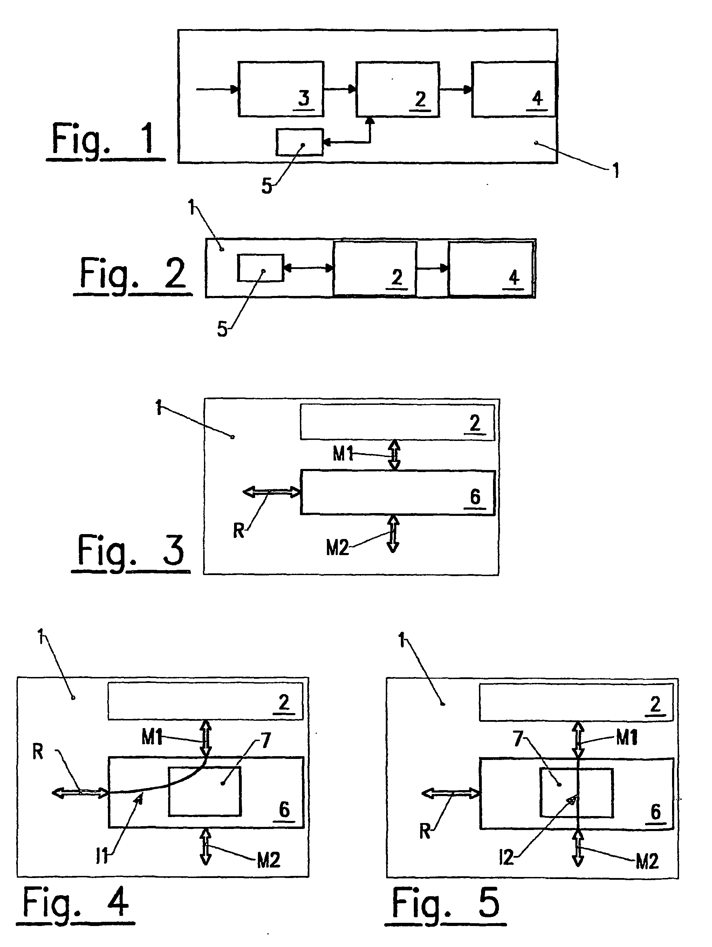

La manière de présenter les données reçues dépend de la plate-forme de visualisation 1 utilisée (figures 1 et 2). Cette plate-forme peut se présenter sous la forme d'un ordinateur personnel muni d'un écran ou d'une carte de réception satellite, ou sous la forme d'un boîtier 2 relié à un poste de télévision.

Certains boîtiers de visualisation 2, de type "ouvert" sont équipés d'une ou plusieurs interfaces permettant d'ajouter des périphériques au système, c'est le cas par exemple des ordinateurs individuels.

Le boîtier de réception 3 de données par satellite et le boîtier de visualisation 2 (ordinateur, décodeur) raccordé à l'écran 4 sont reliés entre eux par une interface généralement standardisée, et conçue pour connecter un ou plusieurs périphériques. Ces boîtiers de visualisation de type "ouvert" peuvent également être dotés d'une interface pour modem 5 (figure 1).

Les boîtiers de visualisation 2 de type "fermé" ne sont pas prévus pour permettre aisément l'ajout de périphériques. Il peut s'agir par exemple de terminaux de consultation Internet, de consoles de jeu. L'accès avec le monde extérieur (Web par exemple) est alors généralement réalisé par une interface de type Modem, utilisant une ligne téléphonique classique (figure 2).

Les périphériques de réception (satellite, câble,...) ne sont actuellement utilisables qu'avec les boîtiers de visualisation 2 de type "ouvert".

Le brevet N° US 5 929 850 (THOMPON / SUN) décrit un système permettant de voir sur un poste de télévision des images fixes de type Internet transmises par réseau numérique, sans utiliser d'interface de type modem.

Le dispositif selon la présente invention a pour objectif de permettre d'utiliser l'interface pour modem présent sur tout boîtier de visualisation pour brancher un périphérique de réception pouvant ne pas avoir de lien avec le réseau téléphonique (récepteur satellite par exemple), les données reçues étant présentées au boîtier de visualisation de type "ouvert" ou "fermé" par l'intermédiaire de son interface modem.

Il est constitué d'un boîtier de raccordement comportant trois interfaces, à savoir : deux interfaces de type modem et une interface de réception de type autre que modem (réception satellite par exemple).

Sur les schémas annexés, donnés à titre d'exemple non limitatif d'une des formes de réalisation de l'objet de l'invention:
les figures 1 et 2, déjà citées, représentent des plates-formes de réception équipées respectivement d'un boîtier de visualisation "ouvert" et d'un boîtier de visualisation "fermé",
la figure 3 représente le boîtier de raccordement à trois Interfaces
et les figures 4 et 5 montrent le boîtier de raccordement connectant un boîtier de visualisation respectivement à un modem et à un récepteur de type différent.

Le dispositif, figures 3 à 5, est constitué d'un boîtier de raccordement 6 équipé d'une mémoire tampon 7 optionnelle et de deux interfaces M1, M2 de type modem, ainsi que d'une interface de réception R qui n'est pas de type modem, l'interface M1 étant utilisée comme accès à un boîtier de visualisation 2 pour recevoir des données provenant de l'interface R, et l'interface M2 étant utilisée pour rendre l'utilisation de M1 transparente.

Le boîtier de visualisation 2 utilise son interface modem quand un accès extérieur est nécessaire. Cette interface est habituellement connectée directement sur une ligne téléphonique. Le boîtier de raccordement 6 est inséré sur cette ligne.

Le boîtier de visualisation est connecté sur l'interface M1 du boîtier de raccordement 6 qui est d'autre part connecté à la ligne téléphonique par son interface M2. Une troisième interface R est présente sur le boîtier de raccordement et permet la réception ou l'envoi de données. Cette interface peut être une interface de réception par satellite par exemple. Les données reçues ou envoyées sur les interfaces M2 et R utilisent donc le canal d'émission/réception que constitue l'interface M1 (interface modem du boîtier de visualisation 2) (figure 3).

L'interface de réception R du boîtier de raccordement 6 permet de recevoir (ou émettre), sans connexion sur la ligne téléphonique, des données provenant d'un réseau de diffusion d'informations (satellite, câble ou terrestre numérique, ou autre réseau).. Leur visualisation par l'intermédiaire de l'interface M1 se déroule en plusieurs étapes :
- Le boîtier de visualisation 2 a besoin de données. Il fait alors une demande de connexion sur ce qu'il croît être la ligne téléphonique, mais qui est dans notre cas l'interface M1.
- Le boîtier de raccordement intercepte l'appel, et simule la ligne téléphonique. Aucun appel n'est encore réalisé sur la ligne téléphonique réelle (interface 2).
- Une première connexion interne 11 est établie dans le boîtier de raccordement 6. Le boîtier de visualisation fait une requête sur les données nécessaires. Le boîtier de raccordement intercepte la requête, et la compare aux données stockées dans la mémoire 7 optionnelle et aux données disponibles sur l'interface R et non stockées. Dans ce cas l'Interface R doit alors soit diffuser ces informations (satellite), ou offrir un méçanisme de requête de ces informations(câble).

La comparaison peut s'effectuer grâce à l'adresse des données voulues par exemple.

Les données stockées proviennent soit de l'interface de réception R où elles ont été reçues précédemment, soit d'une précédente connexion sur l'interface M2.
- Si les données demandées correspondent à des données disponibles sans connexion sur l'interface M2 (ligne téléphonique), elles sont renvoyées au boîtier de visualisation 2 par l'intermédiaire de l'interface M1 (figure 4).

Dans le cas. où une connexion sur la ligne téléphonique réelle (interface M2) est nécessaire, le boîtier de réception 6 devient alors transparent et met en relation les interfaces M1 et M2 en activant une seconde connexion interne 12. Les différentes étapes nécessaires pour arriver à ce résultat sont les suivantes
- Le boîtier de visualisation 2 a besoin de données. Il fait alors une demande de connexion sur ce qu'il croit être la ligne téléphonique. mais qui est dans notre cas l'interface M1.
- Le boîtier de raccordement 6 intercepte l'appel, et simule la ligne téléphonique. Aucun appel n'est réalisé sur la ligne téléphonique réelle (interface M2). La connexion étant établie, le boîtier de visualisation fait une requête sur les données nécessaires
- Le boîtier de raccordement 6 intercepte la requête, et la compare aux données stockées en mémoire 7 et aux données disponibles par l'intermédiaire l'interface de réception R.
- Si les données demandées ne correspondent pas à des données disponibles sans connexion sur l'interface M2 (ligne téléphonique), une connexion est nécessaire sur cette interface.
- Une connexion 72 est effectuée sur l'interface M2. Les paramètres de connexion utilisés sont les mêmes que ceux utilisés lors de la demande de connexion sur l'interface M1.
- La requête de données est envoyée sur "interface M2.
- Les données reçues sur l'interface M2 sont envoyées au boîtier de visualisation sur l'interface 1. (Figure 5)

L'interface modem peut être une interface sans fil de type GSM, DECT, WAP, Blue Tooth ou autre protocole sans fil permettant la connexion d'un téléphone ou périphérique mobile pour la consultation et/ou l'émission de données de type Internet ou autres messageries.

Le boîtier de raccordement 6 pourra avantageusement être équipé d'une prise téléphonique permettant d'accepter la connexion d'un terminal de type Minitel ou tout terminal d'accès Internet se connectant par prise téléphonique.

Le positionnement des divers éléments constitutifs donne à l'objet de l'invention un maximum d'effets utiles qui n'avaient pas été, à ce jour, obtenus par des dispositifs similaires.

## Revendications

1. Boîtier de réception de données numériques à deux interfaces de type modem, destiné à permettre la réception de données numériques provenant d'un réseau de diffusion tel qu'un réseau satellite et pouvant en particulier être constituées de sites Web mis en forme pour une transmission par satellite,
**caractérisé en ce qu'**il est constitué d'un boîtier de raccordement (6) équipé de deux interfaces de type modem (M1, M2), ainsi que d'une interface de réception (R) de type différent, l'ensemble étant agencé pour permettre à un boîtier de visualisation (2) relié à un récepteur (4) tel qu'ordinateur ou poste de télévision et raccordé à l'une des interfaces (M1), la réception ou l'envoi de données soit par l'interface de réception (R), soit par la seconde interface de type modem (M2).

2. Boîtier de réception selon la revendication 1, **se caractérisant par le fait qu'**il est agencé pour pouvoir être inséré, grâce aux deux interfaces (M1, M2) de type modem, sur une ligne téléphonique normalement raccordée à un boîtier de visualisation (2).

3. Boîtier de réception selon la revendication 2, **se caractérisant par le fait qu'**il peut être rendu "transparent" dans le cas d'un raccordement à une ligne téléphonique réelle, par activation d'une connexion interne (2).

4. Boîtier de réception selon l'une quelconques des revendications précédentes, **se caractérisant par le fait que** l'interface de réception (R) est adaptée pour recevoir des données provenant d'un réseau de diffusion d'informations tel qu'un réseau de type satellite, câble ou terrestre numérique.

5. Boîtier de réception selon la revendication 4, **se caractérisant par le fait que** l'interface de réception (R) est équipée d'un mécanisme de requête de ces informations.

6. Boîtier de réception selon l'une quelconques des revendications précédentes, **se caractérisant par le fait que** l'interface de réception (R) permet la réception ou l'envoi de données.

7. Boîtier de réception selon l'une quelconques des revendications précédentes, **se caractérisant par le fait qu'**il est agencé pour recevoir ou émettre des données sans connexion sur une ligne téléphonique en interceptant l'appel provenant du boîtier de visualisation (2), et en simulant la ligne téléphonique, puis en activant une connexion interne (I1) entre l'interface (M1) branchée sur ledit boîtier de visualisation et l'interface de réception (R).

8. Boîtier de réception selon l'une quelconques des revendications précédentes, **se caractérisant par le fait qu'**il est équipé d'une mémoire tampon (7) apte à stocker des données provenant soit de l'interface de réception (R) où elles ont été reçues précédemment, soit d'une précédente connexion sur l'interface (M2) reliée à la ligne téléphonique.

9. Boîtier de réception selon la revendication 8, **se caractérisant par le fait qu'**il est agencé pour comparer une requête provenant du boîtier de visualisation (2), et destinée normalement à la ligne téléphonique, aux données stockées dans la mémoire tampon (7) et aux données disponibles sur l'interface (R) stockées ou non stockées.

10. Boîtier de réception selon l'une quelconques des revendications précédentes, **se caractérisant par le fait qu'**il est équipé d'une prise téléphonique permettant d'accepter la connexion d'un terminal Minitel ou tout terminal d'accès Internet se connectant par la prise téléphonique.

11. Boîtier de réception selon l'une quelconques des revendications précédentes. **se caractérisant par le fait que** l'interface modem est une interface. sans fil de type "GSM". ou autre protocole sans fil permettant la connexion d'un téléphone ou périphérique mobile pour la consultation et/ou l'émission de données de type Internet ou autres messageries.

## Patentansprüche

1. Empfangsgerät für digitale Daten mit zwei Modem-Schnittstellen, das zum Empfang digitaler, aus einem Verteilungsnetz, zum Beispiel einem Satellitennetz kommenden Daten bestimmt ist, die insbesondere aus zur Satellitenübertragung aufbereiteten Websites bestehen können,
**gekennzeichnet dadurch, dass** es aus einem Anschlußgerät (6) besteht, zwei Modem-Schnittstellen (M1, M2) sowie eine Empfangsschnittstelle (R) anderer Art besitzt, wobei das ganze Gerät so aufgebaut ist, dass ein mit einem Empfänger (4), zum Beispiel einem Computer oder einem Fernsehgerät und mit einer der Schnittstellen (M1) verbundenes Anzeigegerät (2) Daten entweder über die Empfangsschnittstelle (R) oder über die zweite Modem-Schnittstelle (M2) aussenden oder empfangen kann.

2. Empfangsgerät gemäß Patentanspruch 1, **gekennzeichnet dadurch, dass** es so gestaltet ist, dass es dank der beiden Modem-Schnittstellen (M1, M2) in eine normal an ein Anzeigegerät (2) angeschlossene Telefonleitung eingefügt werden kann.

3. Empfangsgerät gemäß Patentanspruch 2, **gekennzeichnet dadurch, dass** es beim Anschluß an eine reale Telefonleitung durch Aktivierung eines internen Anschlusses (2) "transparent" gemacht werden kann.

4. Empfangsgerät gemäß einem der vorstehenden Patentansprüche, **gekennzeichnet dadurch, dass** die Empfangsschnittstelle (R) zum Empfang von Daten aus einem Informationsverteilungsnetz, zum Beispiel einem Satelliten-, Kabel- oder digitalen terrestrischen Femsehnetz, geeignet ist.

5. Empfangsgerät gemäß Patentanspruch 4, **gekennzeichnet dadurch, dass** die Empfangsschnittstelle (R) mit einem Abfragemechanismus für diese Informationen ausgerüstet ist.

6. Empfangsgerät gemäß einem der vorstehenden Patentansprüche, **gekennzeichnet dadurch, dass** die Empfangsschnittstelle (R) den Empfang oder das Senden von Daten erlaubt.

7. Empfangsgerät gemäß einem der vorstehenden Patentansprüche, **gekennzeichnet dadurch, dass** es zum Empfang oder Senden von Daten ohne Anschluß an eine Telefonleitung geeignet ist, indem der aus dem Anzeigegerät (2) kommende Anruf abgefangen, eine Telefonleitung simuliert und dann ein interner Anschluß (I1) zwischen der an das genannte Anzeigegerät angeschlossenen Schnittstelle (M1) und der Empfangsschnittstelle (R) aktiviert wird.

8. Empfangsgerät gemäß einem der vorstehenden Patentansprüche, **gekennzeichnet dadurch, dass** es mit einem Pufferspeicher (7) ausgerüstet ist, in dem entweder die zuvor von der Empfangsschnittstelle (R) empfangenen Daten oder Daten von einem früheren Anschluß an die mit der Telefonleitung verbundenen Schnittstelle (M2) gespeichert werden können.

9. Empfangsgerät gemäß Patentanspruch 8, **gekennzeichnet dadurch, dass** es eine Abfrage aus dem Anzeigegerät (2), die normalerweise für die Telefonleitung bestimmt ist, mit den im Pufferspeicher (7) gespeicherten Daten und den in der Schnittstelle (R) gespeicherten oder nicht gespeicherten Daten vergleichen kann.

10. Empfangsgerät gemäß einem der vorstehenden Patentansprüche, **gekennzeichnet dadurch, dass** es einen Telefonanschluß besitzt, mit dem es an ein Minitel-Endgerät oder jedes beliebige Endgerät für den Intemetzugang angeschlossen werden kann.

11. Empfangsgerät gemäß einem der vorstehenden Patenansprüche, **gekennzeichnet dadurch, dass** die Modem-Schnittstelle eine drahtlose Schnittstelle des Typs GSM oder eines sonstigen drahtlosen Protokolls ist, an die ein Telefon oder mobiles Peripheriegerät zur Abfrage und/oder zum Senden von Internet-Daten oder Daten für sonstige Nachrichtensysteme angeschlossen werden kann.

## Claims

1. Digital reception box with two modem-type interfaces for receiving digital data from a transmission network such as a satellite network, in particular consisting of Web sites formatted for satellite transmission,
**characterised in that** it consists of a junction box (6) equipped with two modem type interfaces (M1, M2), and a reception interface (R) of different type, the assembly being arranged to allow a display box (2) connected to a receiver (4) such as computer or television set and connected to one of the interfaces (M1) to receive or dispatch data either through the reception interface (R) or the second modem-type interface (M2).

2. Reception box according to claim 1, **characterised in that** it is arranged in order to be inserted on a telephone line normally connected to a display box (2) by the use of two modem-type interfaces (M1, M2).

3. Reception box according to claim 2, **characterised in that** it can be made "transparent" when connected to a real telephone line, by activating an internal connexion (2).

4. Reception box according to any of the aforesaid claims **characterised in that** reception interface (R) is adapted to receive data from an information transmission network of a digital satellite, cable or terrestrial type.

5. Reception box according to claim 4, **characterised in that** reception interface (R) is equipped with a mechanism for requesting this information.

6. Reception box according to any of the aforesaid claims,
**characterised in that** reception interface (R) allows the reception or the dispatch of data.

7. Reception box according to any of the aforesaid claims, **characterised in that** it is equipped to receive or transmit data without telephone line connection by intercepting the call from display box (2), and by simulating the telephone line, then by activating an internal connexion (I1) between interface (M1) connected on the aforementioned display box and reception interfaces (R).

8. Reception box according to any of the aforesaid claims, **characterised in that** it is equipped with a buffer memory (7) capable of storing data from either reception interface (R) on which they have been previously received, or a previous connexion on interface (M2) connected to the telephone line.

9. Reception box according to claim 8, **characterised in that** it is arranged to compare a request from display box (2), and normally destined for the telephone line, with the data stored in buffer memory (7) and the data available on interface (R) stored or not stored.

10. Reception box according to any one of the previous claims, **characterised in that** it is equipped with a telephone socket for connecting a Minitel terminal or any Internet access terminal by the telephone socket.

11. Reception box according to any of the previous claims, **characterised in that** the modem interface is an wireless interface of the type "GSM" or another wireless protocol allowing the connexion of a mobile telephone or peripheral for the consultation and/or the emission of data of the type Internet or other electronic mail systems.
